# DEMANDE DE BREVET EUROPEEN

(11) **EP 0 712 222 A1**
(43) Date de publication de la demande: **15.05.1996**
(21) Numéro de dépôt: 95402441.0
(22) Date de dépôt: 02.11.1995
(51) Int. Cl.: H04L 25/02

(54) **Dispositif d'adaptation d'une interface de ligne d'une station raccordée à un réseau de transmission d'informations multiplexées**

(30) Priorité: 09.11.1994 FR 9413480
(71) Demandeur: AUTOMOBILES PEUGEOT, F-75116 Paris (FR); AUTOMOBILES CITROEN, F-92200 Neuilly sur Seine (FR)
(72) Inventeur: Fromion, Alexandre, F-92160 Antony (FR)
(74) Mandataire: Habasque, Etienne Joel Jean-François

(57) **Abrégé**

Ce dispositif dans lequel le réseau comporte un câble (4) de transmission, muni d'une paire de conducteurs (2,3), est caractérisé en ce que chaque conducteur (2,3) du câble est raccordé à chacune de ses extrémités, à une borne d'une résistance (9,10) de valeur égale à la moitié de la valeur de l'impédance caractéristique du câble (4) et dont l'autre borne est raccordée à une source de tension (11,12).

## Description

La présente invention concerne un dispositif d'adaptation d'une interface de ligne d'une station raccordée à un réseau de transmission d'informations multiplexées.

L'invention peut en effet s'appliquer aux réseaux de transmission d'informations multiplexées mettant en oeuvre une norme de communication de type VAN ou CAN ou de manière plus générale, aux réseaux utilisant comme méthode d'accès au médium de communication, l'arbitrage bit à bit .

Les normes de communication évoquées précédemment définissent de manière très précise la structure des interfaces de lignes physiques standard qui peuvent être utilisées.

Celles-ci sont très bien adaptées aux contraintes des applications de transmission d'informations multiplexées à l'intérieur des véhicules automobiles.

Cependant, pour des applications industrielles, ou en tous cas dans lesquelles les distances de transmission sont importantes, c'est-à-dire par exemple supérieures à dix mètres, il est nécessaire d'utiliser une autre interface physique d'adaptation.

C'est ainsi par exemple que dans ce type d'applications, on peut utiliser des composants d'interface de type RS485 associés à un câble de transmission d'informations muni d'une paire de conducteurs torsadés et éventuellement blindés.

Cependant, cette structure doit préserver l'ensemble des fonctionnalités du protocole de communication.

Cette remarque se traduit par deux conséquences sur l'utilisation des composants compatibles à la norme RS485, et en particulier des interfaces de ligne :
1. l'interface de ligne doit être pilotée pour réaliser les deux états de bus, c'est-à-dire l'état récessif et l'état dominant, l'état dominant étant caractérisé par le fait qu'il force l'état électrique du câble et l'état récessif étant caractérisé par le fait qu'il peut être écrasé par un état dominant simultanément présent sur le câble ; et
2. le câble de transmission, à cause de sa longueur, doit être adapté en impédance.

Le but de l'invention est donc de résoudre de manière simple et fiable ces problèmes.

A cet effet, l'invention a pour objet un dispositif d'adaptation d'une interface de ligne d'une station raccordée à un réseau de transmission d'informations multiplexées, comportant un câble de transmission muni d'une paire de conducteurs, caractérisé en ce que chaque conducteur du câble est raccordé à chacune de ses extrémités, à une borne d'une résistance de valeur à peu près égale à la moitié de la valeur de l'impédance caractéristique du câble, et dont l'autre borne est raccordée à une source de tension.

Avantageusement, la tension de sortie de chaque source de tension est égale à la tension de la borne de l'interface raccordée au même conducteur du câble, lorsque celle-ci est active.

L'invention sera mieux comprise à l'aide de la description qui va suivre, donnée uniquement à titre d'exemple et faite en se référant aux dessins annexés, sur lesquels :
- la figure 1 représente une schéma synoptique d'une interface de ligne classique, et
- la figure 2 représente un schéma synoptique illustrant la structure d'un dispositif d'adaptation d'une interface de ligne selon l'invention.

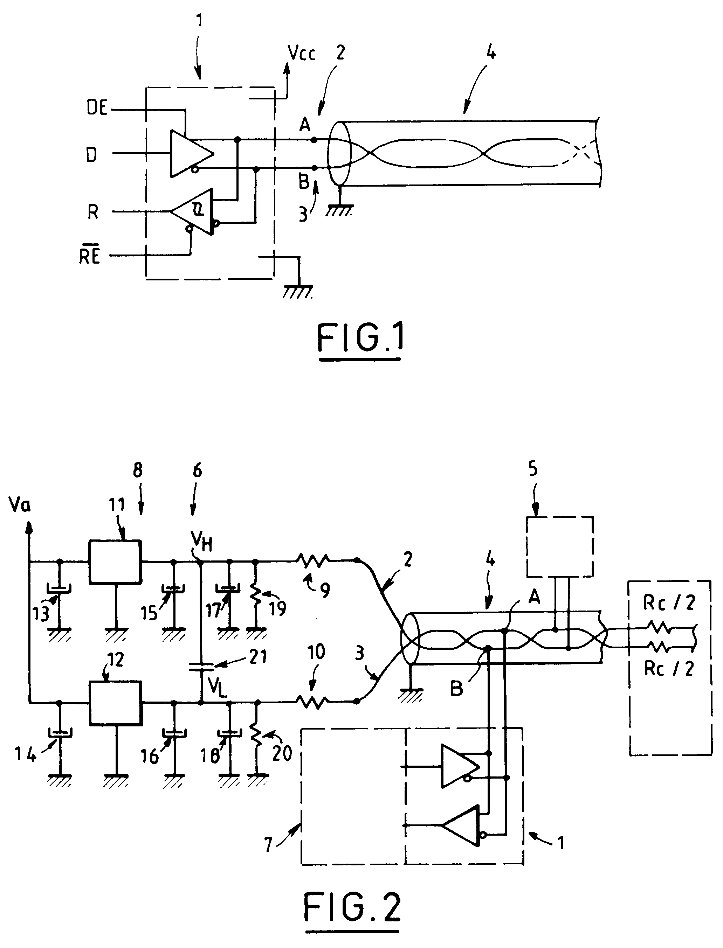

Sur la figure 1, on a représenté un schéma synoptique d'une interface de ligne classique RS485, désignée par la référence générale 1, et raccordée aux conducteurs 2 et 3 d'un câble 4 de transmission d'informations multiplexées.

Ce câble de transmission d'informations multiplexées permet de raccorder plusieurs stations par exemple, et comporte deux conducteurs torsadés et éventuellement blindés.

Une telle interface est caractérisée par deux bornes différentielles connectées aux conducteurs 2 et 3 en A et B du câble, une entrée logique de validation de l'étage de sortie DE (DATA ENABLE) actif ou haute impédance, une entrée logique de commande de l'étage différentiel de sortie D (V_{A}>V_{B} ou V_{B}>V_{A}), une entrée logique de validation du récepteur intégré non RE (RECEIVE ENABLE) et une sortie logique R, fonction des tensions présentes sur les conducteurs du câble.

Les tables de vérité illustrant le fonctionnement de cette interface sont données ci-dessous.

### Table de vérité de l'émetteur.

| Entrée D | Entrée DE | Sortie A | Sortie B |
|---|---|---|---|
| Haut | Haut | Vh | Vb |
| Bas | Haut | Vb | Vh |
| X | Bas | H.Imp | H.Imp |

- Haut :: niveau de sortie pour un "1" logique
- Bas :: niveau de sortie pour un "0" logique
- H. Imp :: haute impédance
- Vh :: tension de sortie au niveau haut (≈3V)
- Vb :: tension de sortie au niveau bas (≈1V)
- X :: sans importance

### Table de vérité du récepteur

| Entrées différentielles A-B | Entrée Re | Sortie R |
|---|---|---|
| > 0,2 V | Bas | Haut |
| < 0,2 V | Bas | Bas |
| X | Haut | H. Imp |

- Haut :: niveau de sortie pour un "1" logique
- Bas :: niveau de sortie pour un "0" logique
- H. Imp :: haute impédance
- X :: sans importance

Le fonctionnement de l'interface de ligne est donc le suivant :
Quand on demande à cette interface de ligne d'émettre un niveau récessif, elle met son étage de sortie en haute impédance, tandis que lorsqu'on lui demande d'émettre un niveau dominant, elle met son étage de sortie dans l'état actif et force B > A (D = "0").

Ce mode de fonctionnement garantit bien un arbitrage bit à bit correct.

Cependant, quand le réseau est au repos, toutes les interfaces de ligne sont dans un état de haute impédance et le niveau électrique sur le câble n'est plus garanti.

Il faut donc forcer un niveau électrique sur ce câble permettant au récepteur de fournir l'information logique "niveau récessif sur le câble".

Cette information permet à un gestionnaire de protocole de la station de savoir si le bus est libre ou occupé.

Une structure permettant de réaliser ceci est illustrée sur la figure 2, dans laquelle on reconnait le câble 4 de transmission d'informations permettant de raccorder des stations par exemple 5 et 6, la station 6 comportant une interface 1 telle que décrite précédemment raccordée à un gestionnaire de protocole 7.

De plus, il est prévu des moyens désignés par la référence générale 8, permettant d'adapter le câble, c'est-à-dire de fermer celui-ci sur son impédance caractéristique (Rc) à chaque extrémité.

Cette impédance du câble dépend des caractéristiques propres de celui-ci c'est-à-dire de son inductance linéique, de sa capacité répartie, etc.

Il y a donc lieu de réaliser une fonction d'adaptation d'impédance et de maintien d'un niveau électrique bien défini sur le câble.

A cet effet, on connecte à chaque extrémité du câble et sur chaque conducteur de la paire torsadée de celui-ci, une résistance dont la valeur est égale à la moitié de la valeur de l'impédance caractéristique Rc de ce câble, cette résistance étant également reliée à une source de tension, constituée par exemple par un régulateur linéaire.

Afin d'optimiser la marge de bruit au niveau du récepteur, les sources de tension utilisées prendront la valeur de la tension de l'interface lorsque celle-ci est active.

C'est ainsi par exemple que sur cette figure 2, chaque conducteur 2 ou 3 de ce câble 4 est raccordé à chacune de ses extrémités à une borne d'une résistance par exemple 9, 10, d'une valeur à peu près égale à la moitié de la valeur de l'impédance caractéristique du câble (Rc) et dont l'autre borne est raccordée à une source de tension 11, 12.

Ces sources de tension sont reliées à une tension d'alimentation Va et différents condensateurs de découplage 13,14,15,16,17 et 18 sont utilisés.

Par ailleurs, des résistances 19 et 20 sont également utilisées pour fixer la charge minimale de sortie de celles-ci.

Les sources de tension 11 et 12 peuvent être constitués par des régulateurs de type linéaire, dont les sorties sont associées à un condensateur de découplage 21 connecté entre les bornes de sortie V_{H} et V_{L} respectivement de ces sources.

Ainsi qu'on l'a indiqué précédemment, la tension de sortie de chaque source de tension peut être égale à la tension de la borne de l'interface raccordée au même conducteur du câble, lorsque celle-ci est active, c'est-à-dire que V_{H} = V_{A} et V_{L} = V_{B} (actif).

On conçoit alors que ce dispositif présente un certain nombre d'avantages dans la mesure où il peut s'adapter à tous types de réseaux en bus basés sur l'arbitrage bit à bit.

Par ailleurs, il permet d'utiliser des composants standard de l'industrie et d'obtenir une bonne fiabilité des transmissions.

Il est également possible de l'utiliser sur des réseaux de grande longueur tout en maintenant les fonctionnalités des protocoles à arbitrage bit à bit et en particulier du protocole VAN et ceci pour un faible coût.

De plus, le temps de transition entre un état dominant et un état récessif est très faible car la constante de temps fixée par la capacité du câble et la résistance de tirage (Rc/2) est très faible, ce qui permet des transmissions à très haut débit sur de très longues distances.

Grâce à une unité de diagnostic automatique intégrée dans les composants VAN, il est également possible de réaliser des liaisons sécurisées en connectant au composant VAN de gestion de protocole, deux interfaces de ligne, l'unité de diagnostic choisissant automatiquement la ou les bonnes entrées.

On conçoit que ce dispositif peut trouver des applications en robotique, dans le domaine ferroviaire et plus généralement dans le domaine industriel.

## Revendications

1. Dispositif d'adaptation d'une interface de ligne d'une station raccordée à un réseau de transmission d'informations multiplexées, comportant un câble (4) de transmission, muni d'une paire de conducteurs (2,3), caractérisé en ce que chaque conducteur du câble (4) est raccordé à chacune de ses extrémités, à une borne d'une résistance (9,10) de valeur à peu près égale à la moitié de la valeur de l'impédance caractéristique (Rc) du câble (4) et dont l'autre borne est raccordée à une source de tension (11,12).

2. Dispositif d'adaptation selon la revendication 1, caractérisé en ce que la tension de sortie de chaque source (11,12) est égale à la tension de la borne de l'interface raccordée au même conducteur du câble, lorsque celle-ci est active.

3. Dispositif d'adaptation selon la revendication 1 ou 2, caractérisé en ce que chaque source de tension comporte un régulateur linéaire.
